(19) Europäisches Patentamt
European Patent Office
Office européen des brevets

(11) **EP 3 820 075 A1**

(12) **EUROPEAN PATENT APPLICATION**

(43) Date of publication:
**12.05.2021 Bulletin 2021/19**

(51) Int Cl.:
*H04L 9/06* (2006.01)  *H04L 9/00* (2006.01)

(21) Application number: **20160357.8**

(22) Date of filing: **02.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **06.11.2019 EP 19207380**

(71) Applicant: **Commsolid GmbH**
**01099 Dresden (DE)**

(72) Inventor: **Hesse, Dr. Kay**
**01129 Dresden (DE)**

(74) Representative: **Lippert Stachow Patentanwälte**
**Rechtsanwälte**
**Partnerschaft mbB**
**Krenkelstraße 3**
**01309 Dresden (DE)**

Remarks:
Amended claims in accordance with Rule 137(2) EPC.

(54) **METHOD FOR PREVENTING BIT FLIP ATTACK ON A SYSTEM ON A CHIP**

(57)    The invention discloses a method for preventing a bit flip attack on a system on chip at an interface between an ASIC and an external non-volatile memory as e.g. FLASH, both connected by a read data path and a write data path. The objective to find a method by which an attacker's ability to alter data or specifically flip a specific bit on an exposed external interface, e.g. between an ASIC and FLASH, can be completely eliminated as well as to achieve to flip a specific bit in internal plain text will be solved by a method for preventing a bit flip attack on a system on chip which comprises an ASIC and an external FLASH, both connected by a read data path and a write data path, wherein a mapping function F is inserted into the read data path transferring rdata and an inverse function $F^{-1}$ of the mapping function F is inserted in the write data path transferring wdata to protect the FLASH against unauthorized modification at an external interface between the ASIC and the FLASH.

Fig. 6

**Description**

The invention relates to a method for preventing a bit flip attack on a system on chip at an interface between an ASIC and an external non-volatile memory as e.g. FLASH, both connected by a read data path and a write data path.

Today's highly integrated SoCs (System on a Chip) typically contain one or more microprocessors. These cores run program code in the order of several hundred kilobytes to several megabytes which need to be stored in non-volatile memory. Ideally, this would be ROM (read-only memory) which is available in all relevant technologies. However, often there is also the requirement to enable code updates later in lifetime of the SoCs. This then requires re-programmable non-volatile memory such as FLASH. Unfortunately, this is not available in all, especially not in relevant deep submicron technologies. Hence, a typical configuration seen today is an ASIC in a modern low-power technology, coupled with an external FLASH chip. In the following "FLASH" should be read as synonym for any non-volatile, electrically erasable and re-writable memory technology, as e.g. FLASH, EEPROM, FRAM, MRAM et.al.

A common desire in these ASIC/FLASH combinations is to protect the FLASH contents against unauthorized modification and ensure authenticity. While this would be quite easy with internal memory, for external FLASH the designer has to take into consideration that the external FLASH can easily be removed, probed or altered. However, this problem is solved in general using modern cryptographic methods, like e.g. AES (Advanced Encryption Standard). The FLASH content is encrypted and cryptographically signed, so it is protected against alteration.

The previous section stated that general modern encryption like AES successfully protects the FLASH contents. While this is true, an attacker can still try to tamper with the system to exploit potential weaknesses elsewhere (without breaking the encryption - so called "side channel attack"). This is possible as in the case of the ASIC/FLASH combination the signals with the two separate chips are accessible on a physical level by the attacker. So, he would be able to force e.g. data bits of the read data to either constant values or flip their value.

Normally, these modifications would not go undetected as this is the whole purpose of the encryption/signature scheme with e.g. AES. And this is completely true in the case that the FLASH contents would be read once, e.g. at system start-up and loaded completely into internal RAM, whether the whole FLASH contents is read as one big image or as several chunks is not relevant, important is the fact that it is only read once.

However, things are different when the FLASH contents have to be read in parts and multiple times. This would be the case when there is not enough internal RAM to hold the complete FLASH image. A typical case would be a small internal cache accessing the external FLASH when there is a cache-miss. Under circumstances like these there would be an initial authentication step, where the complete FLASH image is read once and a cryptographic hash is calculated and compared against the stored in the FLASH. Subsequent reads than simply assume the image is still the one authenticated initially. Nota bene: the FLASH contents in this scenario are still encrypted, so an attacker cannot gain knowledge of the actual code.

So, the question is why is random access now a problem? The reason is that it opens a side-channel attack by selectively altering individual bits of the FLASH read data. The attacker might know that the FLASH data are program code for a specific microprocessor. Therefore, he would know that a specific bit position in program code stands for the distinction between e.g. "jump when zero" and a "jump when not zero". Even if the attacker would not know (because of the encryption) whether a specific read data word is indeed (part of) a jump instruction, he might still just execute a brute-force attack and try to flip bits at different read addresses on repeated attempts. A brute-force attack is a cryptanalytic attack that can, in theory, be used to attempt to decrypt any encrypted data.

This kind of attack can be rendered impossible when no random access is necessary but instead all reads are always executed as blocks of multiple words with always the same start address(es). In this case it is possible to use what is known as "Cipher Block Chaining" (CBC) mode of the used en-/decryption method. In this method the cipher text (plain text) of one word influences the en-(de)cryption of the next cipher text (plain text) word. Since any strong encryption method will include some form of "distribution" of a plain text bit's value into multiple cipher text bits, the CBC mode will cause a propagation of a bit flip into all subsequent words and hence prevent a single-bit attack as described above.

In a random access scenario, however, where each FLASH access can start at any address and can have an arbitrary length, CBC mode (or its derivatives "Propagating Cipher Block Chaining" (PCBC), "Cipher Feedback" (CFB) or "Output Feedback" (OFB)) cannot be used. Instead, what is known as "Counter Mode" (CTR) has to be applied, with the FLASH word address (potentially along with a random "nonce" value) being used as the counter value. In this mode, the counter value is encrypted e.g. using AES and then this value is XORed with the actual data to encrypt (FLASH write) or decrypt (FLASH read).

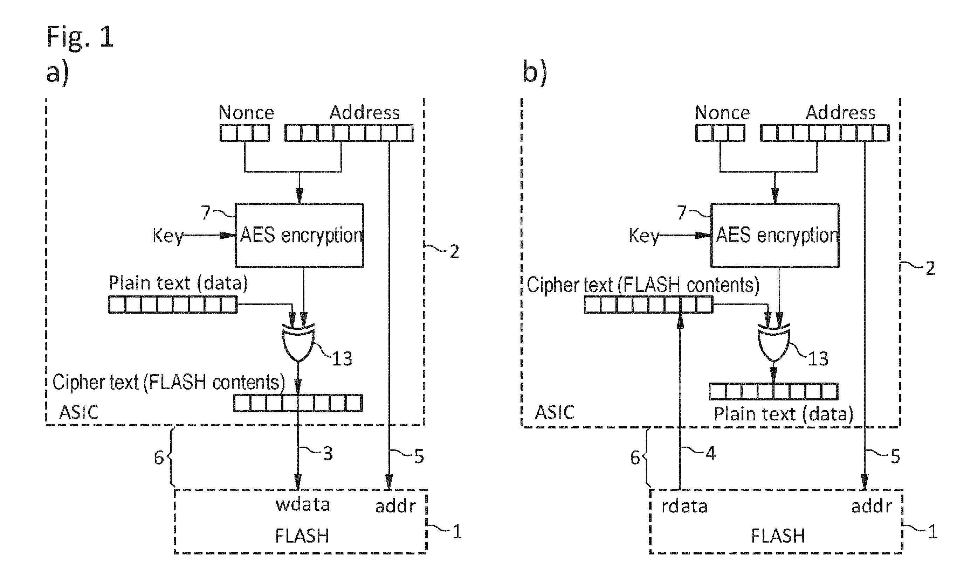

As figures 1a and 1b show, there is an attack surface in the interface between the ASIC and the FLASH. Due to the linearity of the XOR-function of the Counter Mode, a flip in a specific bit in either the write or read data will propagate into the same bit position later. It should be mentioned, though, that an attacker is not able to enforce a certain value into that bit position. If the XOR-summand from the AES block contains a '1' in that bit position, the attacker's value is inverted.

There are essentially three ways around the problem known in the state-of-the-art:

Firstly, avoid true random access completely and enforce accesses with fixed start addresses and lengths only, e.g. always fetch complete cache lines beginning at their start addresses. This allows using CBC mode or its derivatives.

Secondly, implement a bit-shuffling scheme, i.e. change the bit order in some (pseudo-) random way, so that an attacker cannot predict anymore to which true bit position his bit flip would belong. This shuffling still needs to be deterministic and hence the re-ordering needs to be the same for a given address. Also, there is still a one-to-one relation between any cipher text and plain text bit, so that an attacker can still be sure to affect only one plain text bit when flipping one cipher text bit.

Thirdly, use error-detecting (parity) and/or error correcting codes (ECC). With an extra parity bit it is possible to detect a single bit flip and just reject the read data. With ECC a single bit flip can be corrected and it doesn't actually matter in this case whether the flip was from a malicious attacker or due to a random hardware error.

It is desirable to find a method by which an attacker's ability to alter data or specifically flip a specific bit on an exposed external interface, e.g. between an ASIC and FLASH, can be completely eliminated as well as to achieve to flip a specific bit in internal plain text.

The objective of the present invention will be solved by a method for preventing a bit flip attack on a system on chip which comprises an ASIC and an external FLASH, both connected by a read data path and a write data path, wherein a mapping function $F$ is inserted into the read data path transferring rdata and an inverse function $F^{-1}$ of the mapping function **F** is inserted in the write data path transferring wdata to protect the FLASH against unauthorized modification at an external interface between the ASIC and the FLASH.

The new method proposed will allow minimizing the attack surface described earlier by making it much harder for the attacker to change the value of an individual plain text bit.

The attacker may flip a bit either on the way from ASIC to FLASH i.e. flip in wdata on the write data path or on the way from FLASH to ASIC i.e. flip in rdata on the read data path. However, the typical case would be the latter, since most of the data in the FLASH will be read, even multiple times during normal operation of the system, but only a few data words will actually be written to the FLASH (ignoring the initial loading of the FLASH with the complete image, which can even happen in a safe environment).

The idea of the inventive method is to insert a specific mapping function $F$ into the read data path that distributes any given input bit over multiple output bits and insert the inverse function $F^{-1}$ into the write data path.

Both, the mapping function F as well as the inverse function $F^{-1}$ can be considered as a set of linear equations (in GF(2), i.e. the Galois field of two elements) that map a vector of bits (equal to the word width of the FLASH) onto a result vector of the same width:

$$\vec{y} = F(\vec{x})$$
$$= C \times \vec{x}$$
$$= \begin{pmatrix} c_{0,0} & c_{0,1} & c_{0,2} & \cdots & c_{0,n-1} \\ c_{1,0} & c_{1,1} & c_{1,2} & & c_{1,n-1} \\ \vdots & \vdots & \vdots & \ddots & \vdots \\ c_{n-1,0} & c_{n-1,1} & c_{n-1,2} & \cdots & c_{n-1,n-1} \end{pmatrix} \times \begin{pmatrix} x_0 \\ x_1 \\ \vdots \\ x_{n-1} \end{pmatrix} \qquad (\text{Eq. 1})$$

with C being the quadratic n x n coefficient matrix for the mapping i.e. which bits of the original vector $\vec{x}$ contribute to which bit of the result vector $\vec{y}$:

$$y_i = c_{i,0} \cdot x_0 \oplus c_{i,1} \cdot x_1 \oplus \cdots \oplus c_{i,n-1} \cdot x_{n-1} \qquad (\text{Eq. 2})$$

Similarly, the inverse function $F^{-1}$ can be described as:

$$\vec{x} = F^{-1}(\vec{y})$$

$$= C^{-1} \times \vec{y} \qquad\qquad\qquad (\mathrm{Eq.}\ 3)$$

where $C^{-1}$ is the inverse matrix to $C$. All calculations are done in binary, i.e. $x_i, y_i, c_{i,j} \in \{0,1\} \forall i,j$, operator $\cdot$ designates the AND-operation and operator $\oplus$ designates the XOR-operation (sum modulo 2).

According to a variant of the inventive method the choices of the mapping function $F$ is an iterative approach that constantly switches between a generative part and an analytical part, whereas the choices happens at design time of the SoC and only once.

The function $F$ can be chosen quite freely to distribute an input bit over a number $b$ of result bits, however under some conditions that are

1. The number $b$ of coefficients $c_{i,j}$ that are set to '1' in a given column is within the desired range.
2. All input bits are used.
3. The inverse function $F^{-1}$ exists. This is typically the more restrictive condition.

So in a preferred variant of the inventive method the generative part consists of constructing a matrix $C$ that satisfies equations

$$\forall_i = B_{min} \leq \sum_{i=0}^{n-1} c_{i,j} \leq B_{max} \quad (\mathrm{Eq.}\ 4)$$

and

$$\exists i,j : c_{i,j} = 1 \quad (\mathrm{Eq.}\ 5)$$

(conditions 1+2), with $c_{i,j}$ being coefficients of matric $C$ and $B$ being a number of coefficients $c_{i,j}$ that are set to '1' in a column of the matrix $C$.

Condition 3 can be expressed as

$$\exists F^{-1} \equiv \exists C^{-1} \rightarrow \det(C) \neq 0 \quad (\mathrm{Eq.}\ 6)$$

In another preferred variant of the inventive method the analytical part consists of checking whether an inverse matrix $C^{-1}$ exists and calculating the inverse mapping function $F^{-1}$.

Saying "choosing the function $F$" is equivalent to saying "choosing the matrix $C$". Nevertheless, as mentioned above this is an iterative approach that constantly switches between a generative part and an analytical part.

The generative part consists of constructing a matrix $C$ that satisfies Eq. 4 and Eq. 5 and the analytical part consists of checking whether $C^{-1}$ exists and calculating $F^{-1}$. The two parts will be explained in the following in more detail.

Eq. 4 states that in a column of $C$ there are $B_{min} \leq b \leq B_{max}$ coefficients out of n set to '1', where $n$ is the width of the input vector $\vec{x}$. So, for a given number $b$ there are

$$\binom{n}{b} = \frac{n!}{(n-b)! \cdot b!} \qquad\qquad\qquad (\mathrm{Eq.}\ 7)$$

possible distributions of the $b$ '1's over the $n$ rows. Hence, for the whole range $B_{min} \leq b \leq B_{max}$ there are

$$d_c = \sum_{b=B_{min}}^{B_{max}} \binom{n}{b} \qquad\qquad\qquad (\mathrm{Eq.}\ 8)$$

possible distributions per column, so there is a total number of

$$d_m = d_c^m \qquad \text{(Eq. 9)}$$

possible matrices. Generating them all for later checking whether $C^{-1}$ exists would lead to a combinational explosion for bigger $n$. But there are ways to prune this task down by either not even generating a certain constellation of coefficients or at least not testing for $C^{-1}$. One method for that would be to generate only non-equivalent matrices, where we define equivalence of two matrices $G$ and $H$ as $G \equiv H \rightarrow \forall i \exists k \neq i$ so that $\forall j : g_{i,j} = h_{k,j}$ or $\forall i \exists m \neq j$ so that

$$\forall i : g_{i,j} = h_{i,m} \quad \text{(Eq. 10)}$$

that is they are equivalent if they have identical coefficients except for swapped rows or columns. The rationale behind this equivalence criterion is that for the purpose of this approach it is not relevant which specific input bits $x_s$ contribute to which output bits $y_t$ as long as it are $b$ output bits they are contributing to.

For example, if $x_a$ contributes to $y_q$ and $y_r$ and $x_b$ contributes to $y_v$ and $y_w$ then this is as good a mapping as when $x_a$ contributes to $y_v$ and $y_w$ and $x_b$ contributes to $y_q$ and $y_r$. Together with the condition from Eq. 5 this leads to only generating matrices of a somewhat generalized triangular shape. Setting the coefficients in the main diagonal to '1' fulfills Eq. 5 and then distributing the remaining $b-1$ '1's per column only to the top of the main diagonal and using at most $b-1$ rows to the bottom of the main diagonal then leads to this generalized triangular shape:

$$C = \begin{pmatrix} 1 & \beta & \beta & \cdots & \beta & \beta \\ \beta & 1 & \beta & \cdots & \vdots & \vdots \\ \vdots & \beta & 1 & \cdots & \vdots & \vdots \\ \beta & \vdots & \beta & \cdots & \vdots & \vdots \\ 0 & \beta & \vdots & \cdots & \vdots & \vdots \\ 0 & 0 & \beta & \cdots & \vdots & \vdots \\ 0 & 0 & 0 & \ddots & \vdots & \vdots \\ \vdots & \vdots & \vdots & \vdots & 1 & \vdots \\ 0 & 0 & 0 & \cdots & 0 & 1 \end{pmatrix} \qquad \text{(Eq. 11)}$$

with $\beta$ denoting positions where one of the $b-1$ remaining '1's could be placed. This approach greatly reduces the number from Eq. 9 of matrices to check in the second part down to

$$d_m = \prod_{c=0}^{n-1} \left( \sum_0^b \binom{min(c+b,n-1)}{b} \right) \qquad \text{(Eq. 12)}$$

because the number of positions where a '1' could be placed is restricted to the rows atop of the main diagonal or at most $b-1$ places below of the main diagonal. So for the first column there is only one possible distribution of '1's, in the second column there are $b-1$ possible distributions and so forth.

The generalized triangular shape would still allow constructing matrices with duplicated columns. This is due to the fact that for any number $b > 1$ the first $b$ columns of the matrix can have the form

$$\vec{c} = \begin{pmatrix} c_{0,j}=1 \\ c_{1,j}=1 \\ \vdots \\ c_{b-1,j}=1 \\ 0 \\ \vdots \\ 0 \end{pmatrix} \qquad \text{(Eq. 15)}$$

This would lead to the equations defined by the matrix not being linearly independent and thus to $\det(C) = 0$ which would lead to this matrix being rejected in the analytical part. Calculating the determinant of a $n \times n$ matrix requires

$$s_{det} = \sum^{n!} \prod^n c_{i,j} \qquad \text{(Eq. 16)}$$

operations, i.e. the sum over n! terms which are the products of $n$ coefficients, where the product term contains one coefficient from each row and iterates over all possible permutations of columns. Again, this number becomes prohibitively large for greater $n$. Checking for duplicate rows only requires (n-1)! comparisons, so matrices with duplicate rows get rejected from further checking for the solution. Instead of calculating the determinant (which then only indicates the existence of a solution and would require the subsequent calculation of $n \times n$ sub-determinants) there is also the rather brute-force method of trying to directly determine the solution. This will require the calculations of $n \cdot 2^{n}-1$ sums over $1...n$ ($n/2$ in the mean) row vectors.

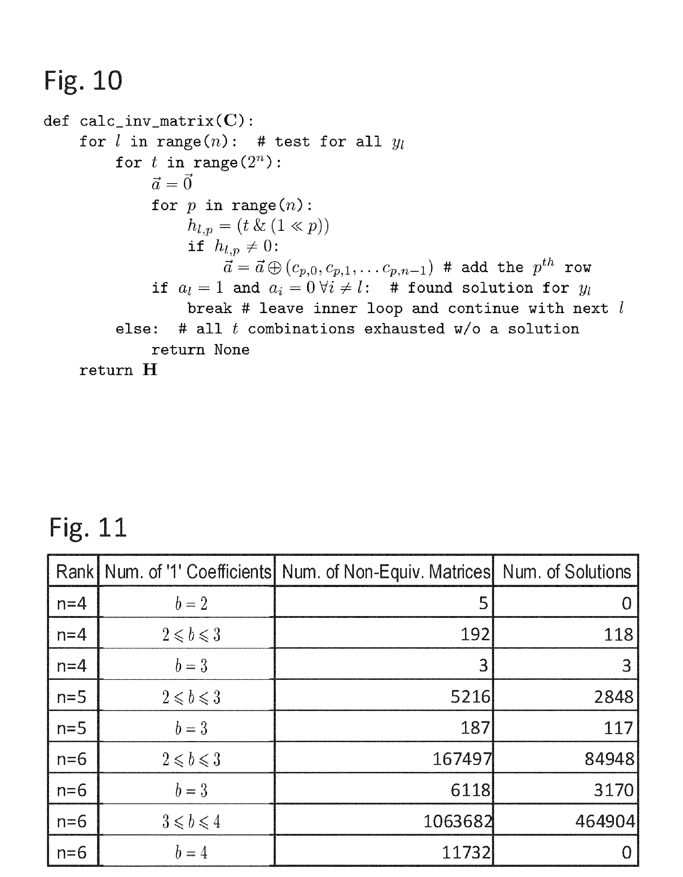

In general, the solution space for inverse matrices from matrices of a given rank $n$ and $B_{min} \leq b \leq B_{max}$ '1' coefficients per column can be empty or contain one or many solutions. Table 3.1 in figure 11 gives some examples.

It should become apparent that both the number of matrices to check as well as the number of solutions grows very fast with growing $n$ and suitable $b$. This, however, also has a positive side: It allows optimizing for implementation by selecting such pairs of $C$ and $C^{-1}$ where the number of non-zero coefficients per row in $C^{-1}$ is small and evenly distributed. In order to discuss the quality of the result for hardware implementation, two special weight vectors derived from a matrix $G$ are defined:

$$\overrightarrow{w_r}(\boldsymbol{G}) = \begin{pmatrix} \sum_{j=0}^{n-1} g_{0,j} \\ \sum_{j=0}^{n-1} g_{1,j} \\ \vdots \\ \sum_{j=0}^{n-1} g_{n-1,j} \end{pmatrix} \qquad \text{Eq. 17}$$

$$\overrightarrow{w_c}(\boldsymbol{G}) = \begin{pmatrix} \sum_{i=0}^{n-1} g_{i,0} & \sum_{i=0}^{n-1} g_{i,1} & \cdots & \sum_{i=0}^{n-1} g_{i,n-1} \end{pmatrix} \qquad \text{Eq. 18}$$

where $\overrightarrow{w_r}(\boldsymbol{G})$ is the column vector of the sums of all coefficients within a row in $G$, while $\overrightarrow{w_c}(\boldsymbol{G})$ is the row vector of the sums of all coefficients within a column in $\boldsymbol{G}$.

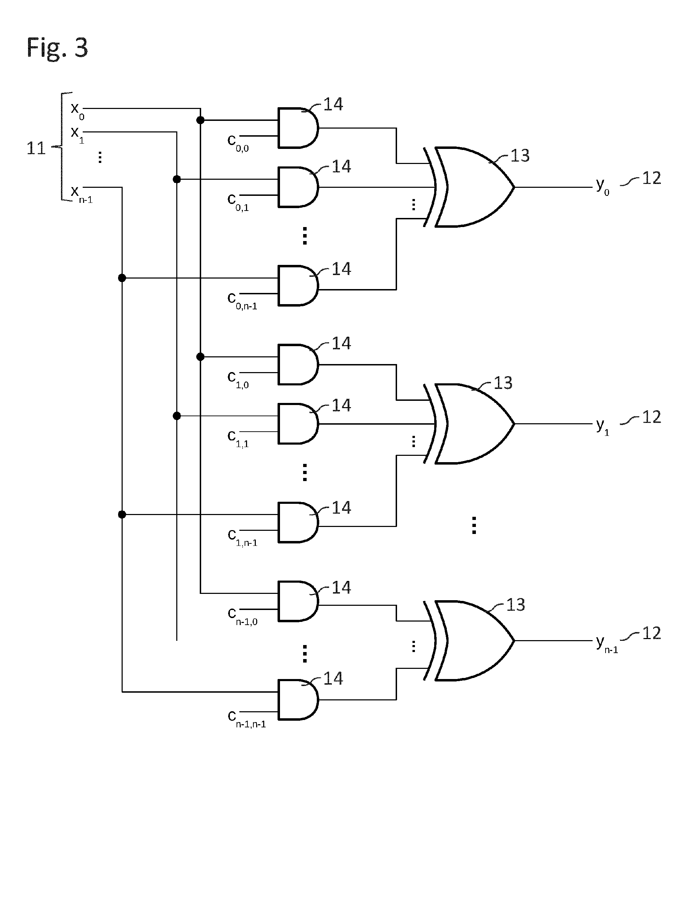

These two weight vectors $\overrightarrow{w_r}(\boldsymbol{G})$ and $\overrightarrow{w_c}(\boldsymbol{G})$ have a meaning for the implementation complexity in hardware and will be explained further down, using figure 3.

In a variant of the inventive method, if the mapping function $F$ is inserted before decryption of the FLASH content, the inverse mapping function $F^{-1}$ is inserted after encryption of the FLASH content.

And in a further variant of the inventive method, if the mapping function $F$ is inserted after decryption of the FLASH content, the inverse mapping function $F^{-1}$ is inserted before encryption of the FLASH content.

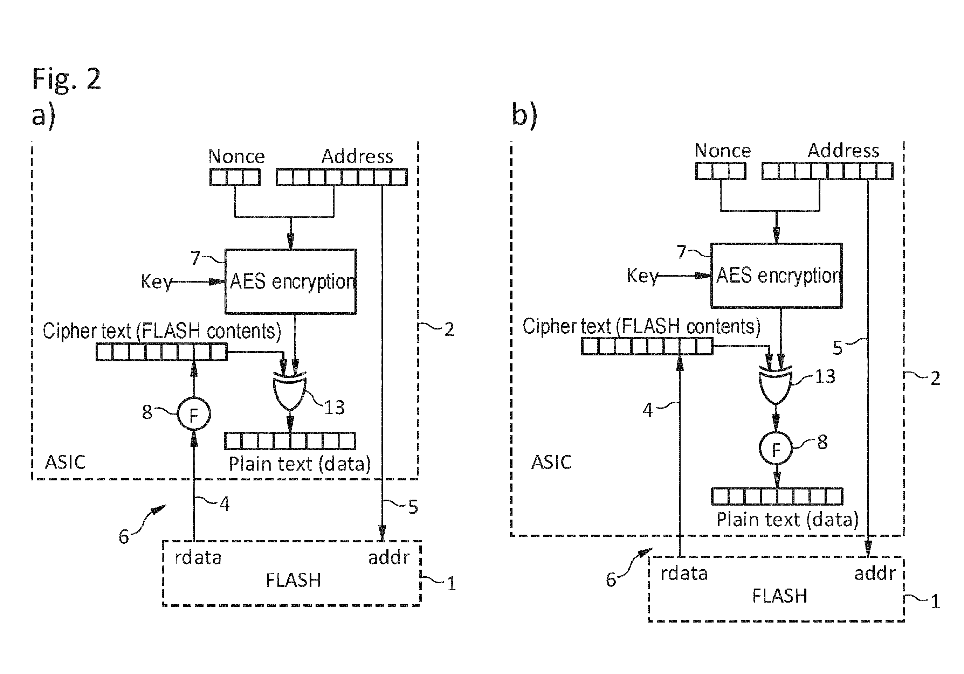

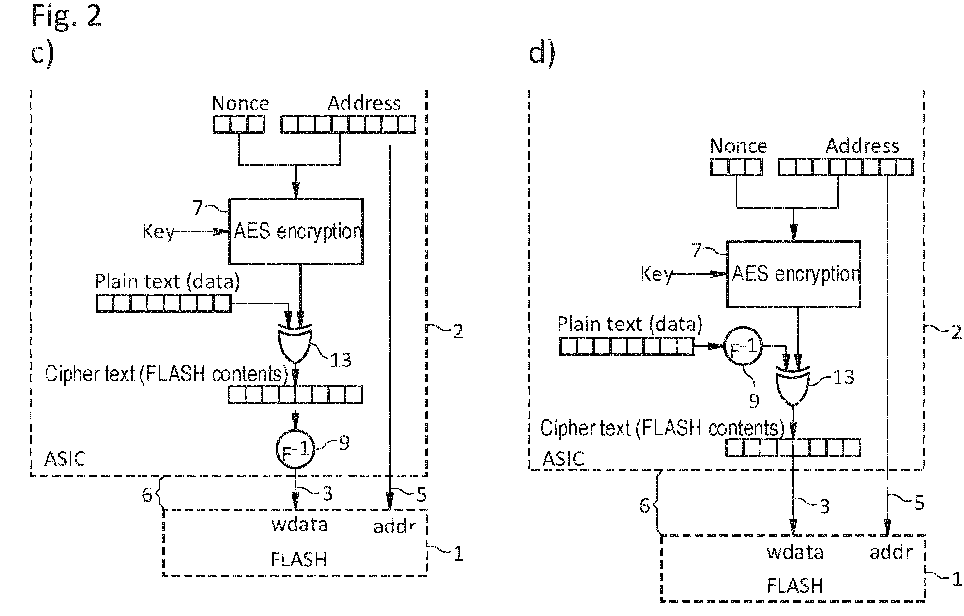

The insertion of the function may happen at two possible places, as illustrated in figures 2a and 2b, as well as the insertion of the inverse function, as shown in figures 2c and 2d. However, the selection for the mapping function F determines the selection for the inverse function $F^{-1}$: When choosing mapping before decryption (figure 2a) the inverse mapping function must be after encryption (figure 2c); correspondingly when mapping after decryption (figure 2b) the inverse function must be before encryption (figure 2d).

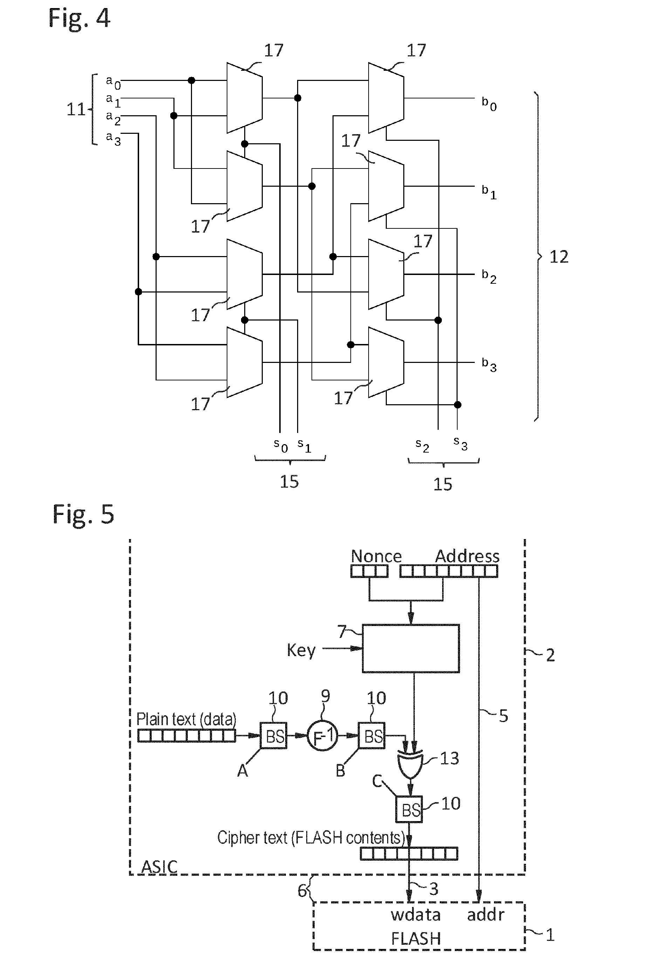

Both, the mapping as well as the inverse mapping can be implemented in the general structure shown in figure 3. The AND-gates shown in figure 4 would typically not exist in real ASICs. Since the matrix coefficients are known at design time there are only two possible cases:

$c_{i,j}$ = 1: the AND-gate would simply be replaced by a direct wire from the input bit to the XOR-gate.
$c_{i,j}$ = 0: the AND-gate is removed and input bit $j$ is not forwarded to the XOR-gate.

Now, also the meaning of the weight vectors becomes clear: The entries of the row weight vector indicate the number of inputs of the respective XOR-gate, i.e. the entry with index $i$ of $\overrightarrow{w_r}$ determines the number of inputs for the XOR-gate calculating $y_i$. The entries of the column weight vector indicate the number of loads (connections to XOR-gates) of the respective input bit, i.e. the entry with index $j$ of $\overrightarrow{w_c}$ determines to how many XOR-gates input bit $x_j$ propagates (see figure 3).

As shown in table 1, the effort for finding a good mapping matrix and its inverse matrix grows extremely with growing $n$ and $b$. It is therefore hardly feasible to determine e.g. the 32 x 32 matrix and its inverse that would be required for a typical 32-bit interface between ASIC and FLASH. Fortunately, for the purpose of this invention it is also not necessary.

So in a preferred variant of the inventive method the wdata and rdata vectors of original length $1$ are divided into sub-vector groups that consists of a number of bits which are smaller than the original length $1$ of the wdata and rdata vectors and a mapping matrix $C$ and its inverse mapping matrix $C^{-1}$ is calculated for each single sub-vector group and applied to each single sub-vector group accordingly, or only one mapping matrix $C$ and its inverse mapping matrix $C^{-1}$ is calculated which is used for each sub-vector groups accordingly, whereas the sub-vectors can be of different length.

Instead of finding a good mapping matrix and its inverse matrix for a typical 32-bit interface between ASIC and FLASH, the 32-bit wdata and rdata vectors are divided into smaller groups of e.g. 8 bits each and then the same 8 x 8 matrix is used for each of these groups or a different matrix is used for each group. It would also be possible to divide the 32-bit vectors unevenly e.g. into sub-vectors of different bit counts, respectively, e.g. into sub-vectors of (6,5,5,6,5,5) bits.

The inventive method described so far indeed prevents an attacker from flipping a certain internal bit when flipping only one bit at the external interface between ASIC and FLASH. However, it does not prevent the attacker from flipping one or multiple specific internal bits in general. If the attacker knows the used (inverse) matrix (which should always be assumed as "security by obscurity" is not a safe concept), he is able to craft the attack by flipping multiple external bits. This is possible because of the linear nature of the XOR function. In general, this would work as follows: Assume the attacker wants to flip specific bits in $\vec{y}$. This is equivalent of saying he wants to add (XOR) an error vector $\vec{e}$ into $\vec{y}$. The attacker cannot control $\vec{y}$, but he can flip bits in $\vec{x}$. Which bits to flip (i.e. which flip-vector $\vec{f}$ to add to $\vec{x}$ can be determined using the following dependencies:

$$\vec{y} \oplus \vec{e} = C \cdot (\vec{x} \oplus \vec{f})$$
$$= C \cdot C^{-1} \cdot (\vec{y} \oplus \vec{e})$$
$$= C \cdot ((C^{-1} \cdot \vec{y}) \oplus (C^{-1} \cdot \vec{e}))$$
$$= C \cdot (\vec{x} \oplus (C^{-1} \cdot \vec{e})) \qquad \text{Eq. 19}$$

hence:

$$\vec{f} = (C^{-1} \cdot \vec{e}) \qquad \text{Eq. 20}$$

To mitigate this problem and prevent the attacker from knowing which bits to flip in a preferred variant of the inventive method a bit shuffle scheme is implemented using a shuffle control vector $\vec{s_c}$, whereas a forward bit shuffle is inserted either before applying the mapping function F, or after applying the mapping function $F^{-1}$ or after encryption of the FLASH content, whereas a backward bit shuffle depends on the insertion of the forward bit shuffle accordingly.

Bit shuffling can be achieved with one or more layers of multiplexers, also known as butterfly structures. The principle of bit shuffling is explained later in an embodiment according to figure 4.

The bit shuffle block can be inserted at three possible places into the data path with no difference in the effect against the attacker. The selection for the forward shuffle then determines place for the backward shuffle. Using figures 2a and 2c as basis, figures 5 and 6 show the respective forward and backward places for the bit shuffle block "BS", where corresponding places are marked with the same capital letter "A", "B" or "C".

The control vector $\vec{s_c}$ for the bit shuffle block itself must not be predictable by an attacker. So, it should not be just static or simply be taken directly from some address bits. Instead, a good approach would be to either use a separate random number or use bits from the AES encryption block, as these inherit the entropy from the pseudo-random key and the encrypted address.

Another way to mitigate the above mentioned problem and to prevent the attacker from knowing which bits to flip is to use the fact that for a given rank $n$ of the matrix and number $b$ of coefficients set to '1' per row there are often multiple matrices that fulfill the conditions given in Eq.4, Eq.5 and Eq.6 and dynamically switch between these matrices.

So in a further preferred variant of the inventive method a select vector $\vec{s}$ is used for dynamically switching between multiple matrices $C$, whereas the select vector $\vec{s}$ switches between different coefficient sets $\{c_{0,i,j}\}...\{c_{k-1,i,j}\}$ defining said matrices $C$.

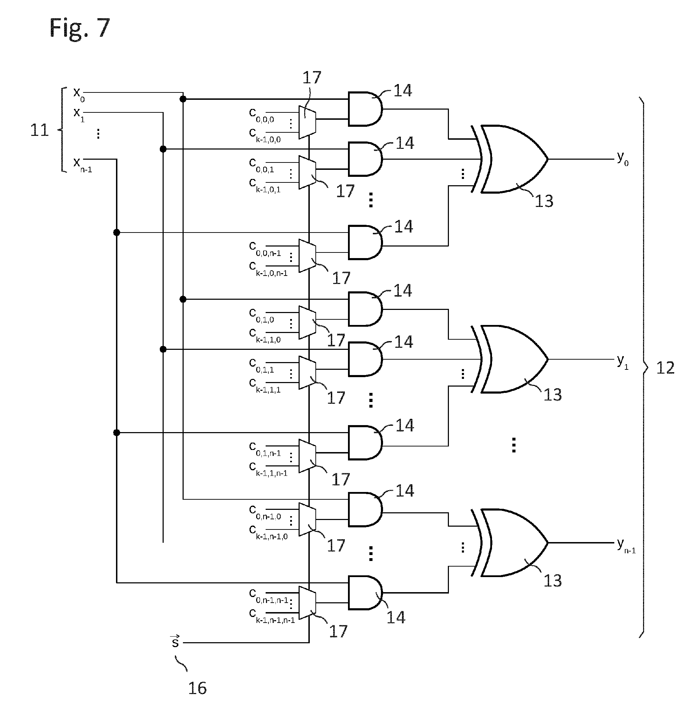

This other approach also enables to hide the relation between input and output bits of the mapping. Referring figure 3 for the generic mapping structure, figure 7 shows how the dynamically switching between multiple matrices $C$ can be implemented.

Essentially, another control vector $\vec{s}$ switches between different coefficient sets $\{c_{0,i,j}\}...\{c_{k-1,i,j}\}$ for the XOR-sums. The same remarks concerning non-predictability as made above for the bit shuffling apply to $\vec{s}$. It should be noted that due to the coefficients being fixed at design time, the multiplexer/AND structures in figure 7 would be simplified for actual physical implementation.

Both approaches, bit shuffling as well as using multiple matrices, have the same effect of successfully hiding the relation between bit positions between plain and cipher text, provided the other control vector $\vec{s}$ is generated with sufficient entropy. Also the necessary gate count for implementation of either approach is comparable.

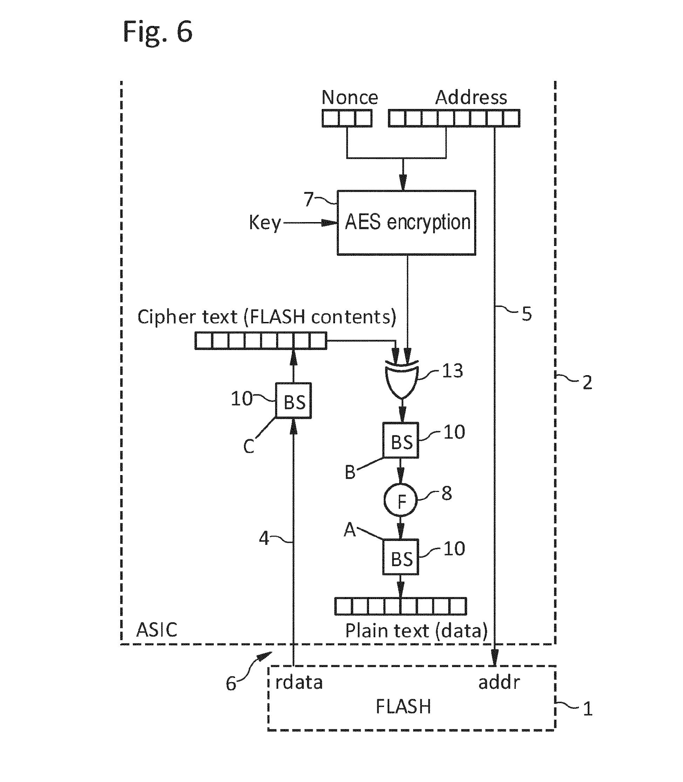

In another further preferred variant of the inventive method, the bit shuffle scheme and the dynamically switching between multiple matrices $C$ can be combined. The mapping function $F$ as well as the inverse $F^{-1}$ inserted as circles in figures 5 and 6 symbolize a set of such functions from which one each is selected.

Summarizing the inventive method, it is possible to completely eliminate an attacker's ability to flip a specific bit on an exposed external interface (like between ASIC and FLASH) and achieve to flip a specific bit in internal plain text. The presented variants greatly minimize the attacker's ability to craft an attack flipping multiple bits on the external interface to achieve flipping of known internal bits. Furthermore, the presented variants of the inventive method only cause a minimal hardware overhead in implementation. They are also compatible with various approaches of encryption, can be combined with other anti-side-channel attack measures and are transparent for firmware using the data.

The invention will be explained in more detail using exemplary embodiments.

The appended drawings show

Fig. 1    (a) Encryption and (b) Decryption in Counter mode;

Fig. 2    (a) Insertion of mapping function $F$ before Decryption,
          (b) Insertion of mapping function $F$ after Decryption,
          (c) Insertion of inverse mapping function $F^{-1}$ after Encryption,
          (d) Insertion of inverse mapping function $F^{-1}$ before Encryption;

Fig. 3    Generic mapping function;

Fig. 4    Exemplary bit shuffling network;

Fig. 5    Insertion of forward bit shuffling;

Fig. 6    Insertion of backward bit shuffling;

Fig. 7    Implementation of multi-matrix variant/approach;

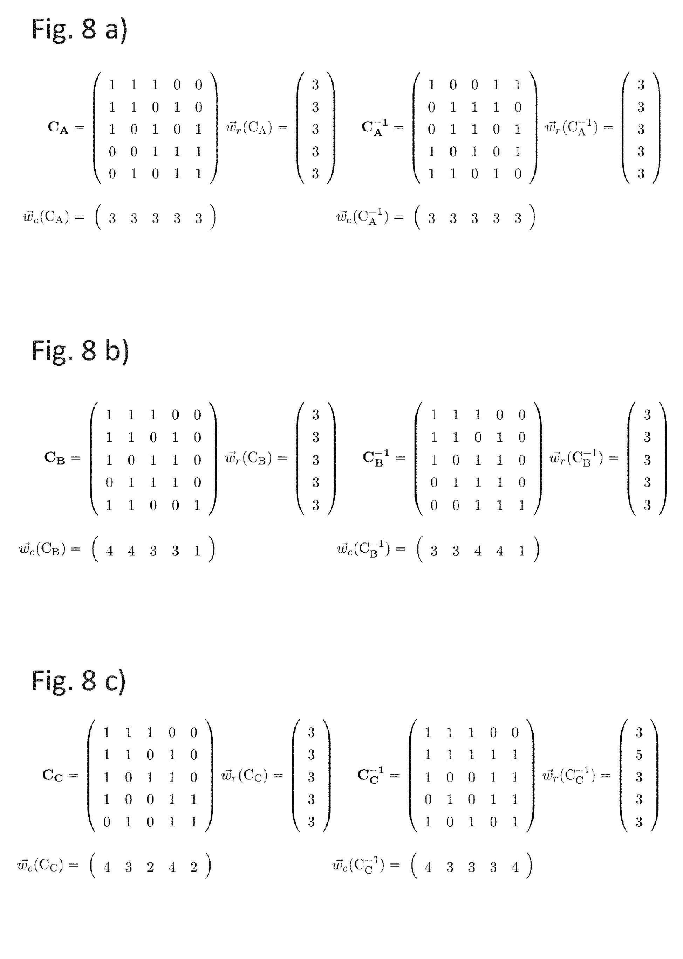

Fig. 8    Examples of a matrix with inverse and weight vectors: (a) matrix A, (b) matrix B and (c) matrix C;

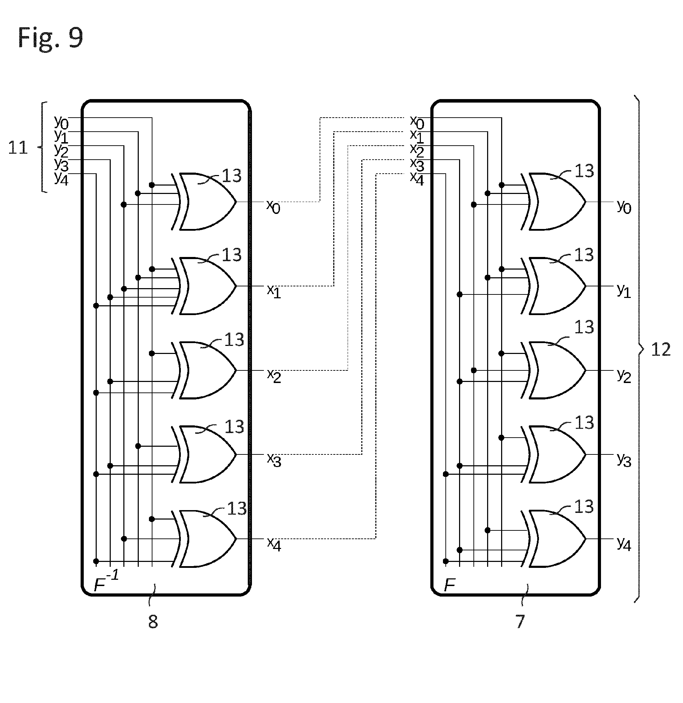

Fig. 9    Mapping (on the right side) and inverse mapping (on the left side) structure for example C in figure 8;

Fig. 10   Pseudo-Code for calculation of inverse matrix;

Fig. 11   Table 1: Solution Space for some example matrix configurations.

In the description above it becomes present that for a number of $B_{min} \leq b \leq B_{max}$ coefficients out of $n$ set to '1' there are a total number of $d_m = d_c^m$ possible matrices, which has to be checked whether $C^{-1}$ exists or not, whereas this leads to a combinational explosion for bigger $n$. An example will illustrate this matter.

Assuming a 5 x 5 matrix with $b = 3$ '1's per row, the number of distributions according to Eq. 9 would be

$$d_{m,all} = \binom{5}{3}^5 = \left(\frac{5!}{2! \cdot 3!}\right) \cdot 5 = 10^5 = 100000 \qquad \text{(Eq. 13)}$$

while restricting the constellations to non-equivalent only leads to

$$d_{m,noneq} = \binom{3}{3} \cdot \binom{4}{3} \cdot \binom{4}{3} \cdot \binom{4}{3} \cdot \binom{4}{3} = \frac{3!}{3! \cdot 1!} \cdot \left(\frac{4!}{3! \cdot 1!}\right)^4 = 1 \cdot 4^4 = 256 \qquad \text{(Eq. 14)}$$

distributions, which is a factor of ≈390 compared to the previous number. This ratio increases rapidly with bigger *n*.

As further described above, the generalized triangular shape (see Eq. 11) greatly reduces the number from Eq. 9 of matrices. It also still allows constructing matrices with duplicated columns. Calculating the determinant of a *n* x *n* matrix in order to fulfill Eq. 6 (det(C)≠0) requires, according to Eq. 16, the sum over *n!* terms which are the product of *n* coefficients. For the 5 x 5 matrix from above this would result in the sum over 5! = 120 product terms of 5 coefficients each, for an 8 x 8 matrix there would be already be 40320 additions.

For further reducing the effort for finding a solution a rather brute-force method is used of trying to directly determine the solution. This will require the calculations of *n•2n-1* sums over *1...n* (*n/2* in the mean) row vectors. With the above example of the 5 x 5 matrix this would result in 388 additions, but with an 8 x 8 matrix it would only be 8160 additions, so much less than for the determinant according to Eq. 16. It works as shown in the python-like pseudo-code to calculate $H = C^{-1}$ as shown in figure 10.

Figure 8 presents three examples for matrices with inverse and weight vectors for *n* = 5 and *b* = 3, respectively. It can be observed that example A (figure 8a) shows perfect balance in the weight vectors, in example B (figure 8b) the column weight vectors of both matrices are not balanced and in example C (figure 8c) the column weight vector of matrix *C* as well as both weight vectors of the inverse matrix are not balanced.

The third example of figure 8c is illustrated in figure 9 as hardware implementation. Figure 9 illustrates both the mapping and the inverse mapping. Referring to figures 2a and 2c, the mapping function *F* is shown on the right hand side and the inverse mapping function $F^{-1}$ on the left hand side. The dashed lines then symbolize the flow of data through the FLASH with wdata being at the left end of the dashed lines and rdata on the right.

A preferred embodiment of the inventive method, using a bit shuffle scheme, is shown in figure 4. Figure 4 illustrates how to generate permutations of a 4-bit input vector $\vec{a}$ 11 to an output vector $\vec{b}$, based on a shuffle control vector $\vec{s_c}$ 15. Based on the number of permutations the designer wants to achieve, it would be possible to limit the number of multiplexer layers (e.g. use only the left layer in the figure 4) or to decrease the number of control bits (e.g. set $s_0 = s_1$ and $s_2 = s_3$, so there are only 4 instead of 16 permutations).

Another preferred embodiment of the inventive method is shown in figure 7. Another control vector $\vec{s}$ 16 switches between different coefficient sets $\{c_{0,i,j}\}...\{c_{k-1,i,j}\}$ for the XOR-sums 13. It should be noted that due to the coefficients being fixed at design time, the multiplexer 17 /AND 14 structures in figure 7 would be simplified for actual physical implementation.

## List of Reference Signs

| 1 | FLASH |
|---|---|
| 2 | ASIC |
| 3 | Write data path |
| 4 | Read data path |
| 5 | Address path |
| 6 | interface |
| 7 | Encryption block |
| 8 | Mapping function *F* |
| 9 | Inverse mapping function $F^{-1}$ |
| 10 | Bit shuffle block |
| 11 | Input bit |
| 12 | Output bit |
| 13 | XOR-gate |
| 14 | AND-gate |
| 15 | Shuffle Control vector |
| 16 | Another control vector |
| 17 | multiplexer |

## Claims

1. A method for preventing a bit flip attack on a system on chip which comprises an ASIC (2) and an external non-volatile memory (1), both connected by a read data path (4) and a write data path (3), wherein a mapping function (8) is inserted into the read data path (4) transferring rdata and an inverse function (9) of the mapping function (8) is inserted in the write data path (3) transferring wdata to protect the external non-volatile memory (1) against unauthorized modification at an external interface (6) between the ASIC (2) and the external non-volatile memory (1).

2. The method according to claim 1, wherein the choices of the mapping function (8, 9) is an iterative approach that constantly switches between a generative part and an analytical part, whereas the choices happens at design time of the SoC and only once.

3. The method according to claim 2, wherein the generative part consists of constructing a matrix **C** that satisfies

equations $\forall_i = B_{min} \leq \sum_{i=0}^{n-1} c_{i,j} \leq B_{max}$ and $\exists i,j : c_{i,j} = \mathbf{1}$, with $c_{i,j}$ being coefficients of matric **C** and $B$ being a number of coefficients $c_{i,j}$ that are set to '1' in a column of the matrix **C.**

4. The method according to claim 2, wherein the analytical part consists of checking whether an inverse matrix $C^{-1}$ exists and calculating the inverse mapping function $F^{-1}$ (9).

5. The method according to one of the former claims, wherein if the mapping function (8) is inserted before decryption of the external non-volatile memory (1) content, the inverse mapping function (9) is inserted after encryption of the external non-volatile memory (1) content.

6. The method according to one of the former claims, wherein if the mapping function (8) is inserted after decryption of the external non-volatile memory (1) content, the inverse mapping function (9) is inserted before encryption of the external non-volatile memory (1) content.

7. The method according to one of the former claims, wherein the wdata and rdata vectors of original length *1* are divided into sub-vector groups that consist of a number of bits which are smaller than the original length *1* of the wdata and rdata vectors and a mapping matrix **C** and its inverse mapping matrix $C^{-1}$ is calculated for each single sub-vector group and applied to each single sub-vector group accordingly, or only one mapping matrix **C** and its inverse mapping matrix $C^{-1}$ is calculated which is used for each sub-vector groups accordingly, whereas the sub-vectors can be of different length.

8. The method according to one of the former claims, wherein a bit shuffle scheme is implemented (10) using a shuffle control vector $\vec{s_c}$ (15), whereas a forward bit shuffle (10) is inserted either before applying the mapping function $F$ (8), or after applying the invers mapping function $F^{-1}$ (9) or after encryption of the external non-volatile memory (1) content, whereas a backward bit shuffle depends on the insertion of the forward bit shuffle (10) accordingly.

9. The method according to one of the former claims, wherein another control vector $\vec{s}$ (16) is used for dynamically switching between multiple matrices **C,** whereas the control vector $\vec{s}$ (16) switches between different coefficient sets $\{c_{0,i,j}\}...\{c_{k-1,i,j}\}$ defining said matrices **C.**

10. The method according to one of the former claims, wherein the bit shuffle scheme and the dynamically switching between multiple matrices **C** can be combined.

**Amended claims in accordance with Rule 137(2) EPC.**

1. A method for preventing a bit flip attack on a system on chip, SoC, at an interface (6) between an ASIC (2) and an external non-volatile memory (1) as part of the SoC, both connected by a read data path (4) and a write data path (3), wherein a mapping function (8) is inserted into the read data path (4) transferring rdata and an inverse function (9) of the mapping function (8) is inserted in the write data path (3) transferring wdata to protect the external non-volatile memory (1) against an unauthorized side-channel attack by selectively altering individual bits at the external interface (6) between the ASIC (2) and the external non-volatile memory (1), whereas the mapping function (8, 9) distributes any given input bit over multiple output bits to prevent flipping a certain internal bit when flipping only one bit at the external interface (6) between the ASIC (2) and the memory (1).

2. The method according to claim 1, wherein the choices of the mapping function (8, 9) is an iterative approach that constantly switches between a generative part and an analytical part, whereas the choices happens at design time of the SoC and only once.

3. The method according to claim 2, wherein the generative part consists of constructing a matrix C that satisfies

equations $\forall_i = B_{min} \leq \sum_{i=0}^{n-1} c_{i,j} \leq B_{max}$ and $\exists i,j : c_{i,j} = 1,$ with $c_{i,j}$ being coefficients of matric C and B being a number of coefficients $c_{i,j}$ that are set to '1' in a column of the matrix C.

4. The method according to claim 2, wherein the analytical part consists of checking whether an inverse matrix $C^{-1}$ exists and calculating the inverse mapping function $F^{-1}$ (9) .

5. The method according to one of the former claims, wherein if the mapping function (8) is inserted before decryption of the external non-volatile memory (1) content, the inverse mapping function (9) is inserted after encryption of the external non-volatile memory (1) content.

6. The method according to one of the former claims, wherein if the mapping function (8) is inserted after decryption of the external non-volatile memory (1) content, the inverse mapping function (9) is inserted before encryption of the external non-volatile memory (1) content.

7. The method according to one of the former claims, wherein the wdata and rdata vectors of original length 1 are divided into sub-vector groups that consist of a number of bits which are smaller than the original length 1 of the wdata and rdata vectors and a mapping matrix **C** and its inverse mapping matrix $C^{-1}$ is calculated for each single sub-vector group and applied to each single sub-vector group accordingly, or only one mapping matrix **C** and its inverse mapping matrix $C^{-1}$ is calculated which is used for each sub-vector groups accordingly, whereas the sub-vectors can be of different length.

8. The method according to one of the former claims, wherein a bit shuffle scheme is implemented (10) using a shuffle control vector $\vec{s_c}$ (15), whereas a forward bit shuffle (10) is inserted either before applying the mapping function F (8), or after applying the invers mapping function $F^{-1}$ (9) or after encryption of the external non-volatile memory (1) content, whereas a backward bit shuffle depends on the insertion of the forward bit shuffle (10) accordingly.

9. The method according to one of the former claims, wherein another control vector $\vec{s}$ (16) is used for dynamically switching between multiple matrices **C,** whereas the control vector $\vec{s}$ (16) switches between different coefficient sets $\{C_{0,i,j}\}...\{C_{k-1,i,j}\}$ defining said matrices **C.**

10. The method according to one of the claims 8 or 9, wherein the bit shuffle scheme and the dynamically switching between multiple matrices **C** can be combined.

Fig. 1

Fig. 2

Fig. 2

c)

d)

EP 3 820 075 A1

# Fig. 3

## Fig. 4

## Fig. 5

# Fig. 6

Fig. 7

# Fig. 8 a)

$$C_A = \begin{pmatrix} 1 & 1 & 1 & 0 & 0 \\ 1 & 1 & 0 & 1 & 0 \\ 1 & 0 & 1 & 0 & 1 \\ 0 & 0 & 1 & 1 & 1 \\ 0 & 1 & 0 & 1 & 1 \end{pmatrix} \quad \vec{w}_r(C_A) = \begin{pmatrix} 3 \\ 3 \\ 3 \\ 3 \\ 3 \end{pmatrix} \qquad C_A^{-1} = \begin{pmatrix} 1 & 0 & 0 & 1 & 1 \\ 0 & 1 & 1 & 1 & 0 \\ 0 & 1 & 1 & 0 & 1 \\ 1 & 0 & 1 & 0 & 1 \\ 1 & 1 & 0 & 1 & 0 \end{pmatrix} \quad \vec{w}_r(C_A^{-1}) = \begin{pmatrix} 3 \\ 3 \\ 3 \\ 3 \\ 3 \end{pmatrix}$$

$$\vec{w}_c(C_A) = \begin{pmatrix} 3 & 3 & 3 & 3 & 3 \end{pmatrix} \qquad\qquad \vec{w}_c(C_A^{-1}) = \begin{pmatrix} 3 & 3 & 3 & 3 & 3 \end{pmatrix}$$

# Fig. 8 b)

$$C_B = \begin{pmatrix} 1 & 1 & 1 & 0 & 0 \\ 1 & 1 & 0 & 1 & 0 \\ 1 & 0 & 1 & 1 & 0 \\ 0 & 1 & 1 & 1 & 0 \\ 1 & 1 & 0 & 0 & 1 \end{pmatrix} \quad \vec{w}_r(C_B) = \begin{pmatrix} 3 \\ 3 \\ 3 \\ 3 \\ 3 \end{pmatrix} \qquad C_B^{-1} = \begin{pmatrix} 1 & 1 & 1 & 0 & 0 \\ 1 & 1 & 0 & 1 & 0 \\ 1 & 0 & 1 & 1 & 0 \\ 0 & 1 & 1 & 1 & 0 \\ 0 & 0 & 1 & 1 & 1 \end{pmatrix} \quad \vec{w}_r(C_B^{-1}) = \begin{pmatrix} 3 \\ 3 \\ 3 \\ 3 \\ 3 \end{pmatrix}$$

$$\vec{w}_c(C_B) = \begin{pmatrix} 4 & 4 & 3 & 3 & 1 \end{pmatrix} \qquad\qquad \vec{w}_c(C_B^{-1}) = \begin{pmatrix} 3 & 3 & 4 & 4 & 1 \end{pmatrix}$$

# Fig. 8 c)

$$C_C = \begin{pmatrix} 1 & 1 & 1 & 0 & 0 \\ 1 & 1 & 0 & 1 & 0 \\ 1 & 0 & 1 & 1 & 0 \\ 1 & 0 & 0 & 1 & 1 \\ 0 & 1 & 0 & 1 & 1 \end{pmatrix} \quad \vec{w}_r(C_C) = \begin{pmatrix} 3 \\ 3 \\ 3 \\ 3 \\ 3 \end{pmatrix} \qquad C_C^{-1} = \begin{pmatrix} 1 & 1 & 1 & 0 & 0 \\ 1 & 1 & 1 & 1 & 1 \\ 1 & 0 & 0 & 1 & 1 \\ 0 & 1 & 0 & 1 & 1 \\ 1 & 0 & 1 & 0 & 1 \end{pmatrix} \quad \vec{w}_r(C_C^{-1}) = \begin{pmatrix} 3 \\ 5 \\ 3 \\ 3 \\ 3 \end{pmatrix}$$

$$\vec{w}_c(C_C) = \begin{pmatrix} 4 & 3 & 2 & 4 & 2 \end{pmatrix} \qquad\qquad \vec{w}_c(C_C^{-1}) = \begin{pmatrix} 4 & 3 & 3 & 3 & 4 \end{pmatrix}$$

Fig. 9

## Fig. 10

```
def calc_inv_matrix(C):
    for l in range(n):  # test for all y_l
        for t in range(2^n):
            a⃗ = 0⃗
            for p in range(n):
                h_{l,p} = (t & (1 ≪ p))
                if h_{l,p} ≠ 0:
                    a⃗ = a⃗ ⊕ (c_{p,0}, c_{p,1}, ... c_{p,n-1})  # add the p^{th} row
            if a_l = 1 and a_i = 0 ∀i ≠ l:  # found solution for y_l
                break  # leave inner loop and continue with next l
        else:  # all t combinations exhausted w/o a solution
            return None
    return H
```

## Fig. 11

| Rank | Num. of '1' Coefficients | Num. of Non-Equiv. Matrices | Num. of Solutions |
|------|--------------------------|-----------------------------|-------------------|
| n=4 | $b = 2$ | 5 | 0 |
| n=4 | $2 \leqslant b \leqslant 3$ | 192 | 118 |
| n=4 | $b = 3$ | 3 | 3 |
| n=5 | $2 \leqslant b \leqslant 3$ | 5216 | 2848 |
| n=5 | $b = 3$ | 187 | 117 |
| n=6 | $2 \leqslant b \leqslant 3$ | 167497 | 84948 |
| n=6 | $b = 3$ | 6118 | 3170 |
| n=6 | $3 \leqslant b \leqslant 4$ | 1063682 | 464904 |
| n=6 | $b = 4$ | 11732 | 0 |

Europäisches
Patentamt

European
Patent Office

Office européen
des brevets

# EUROPEAN SEARCH REPORT

**Application Number**

EP 20 16 0357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Huimin Meng ET AL: "Journal of Algorithms and Computation Tree Technology for Memory Confidentiality Integrity Protection", , 1 June 2018 (2018-06-01), XP055725114, Retrieved from the Internet: URL:https://jac.ut.ac.ir/article_68338_0a7e4f4334e2402b0b30c24b72ac86b6.pdf | 1-4,6,7, 9 | INV. H04L9/06 H04L9/00 |
| Y | * section 4.2; figures 2,3 * ----- | 8,10 | |
| X | US 2010/002873 A1 (FERGUSON NIELS THOMAS [US]) 7 January 2010 (2010-01-07) | 1-3,5-7, 9 | |
| Y | * paragraphs [0003], [0005], [0008], [0043]; figures 1,4 * ----- | 8,10 | |
| Y | EP 1 841 122 A1 (SCHUMACHER ALAIN [LU]) 3 October 2007 (2007-10-03) * paragraphs [0004], [0005], [0008] * ----- | 8,10 | |
| | | | TECHNICAL FIELDS SEARCHED (IPC) H04L |

The present search report has been drawn up for all claims

| Place of search | Date of completion of the search | Examiner |
|---|---|---|
| Munich | 26 August 2020 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 16 0357

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2020

| Patent document cited in search report | Publication date | Patent family member(s) | | Publication date |
|---|---|---|---|---|
| US 2010002873 A1 | 07-01-2010 | US | 2007058806 A1 | 15-03-2007 |
| | | US | 2010002873 A1 | 07-01-2010 |
| EP 1841122 A1 | 03-10-2007 | CA | 2648084 A1 | 11-10-2007 |
| | | CN | 101411114 A | 15-04-2009 |
| | | EP | 1841122 A1 | 03-10-2007 |
| | | EP | 2002594 A1 | 17-12-2008 |
| | | JP | 2009531728 A | 03-09-2009 |
| | | US | 2010174897 A1 | 08-07-2010 |
| | | WO | 2007113217 A1 | 11-10-2007 |

EPO FORM P0459

For more details about this annex : see Official Journal of the European Patent Office, No. 12/82